## Europäisches Patentamt
## European Patent Office
## Office européen des brevets

(19)

(11) Publication number: **0 136 156 B1**

(12) **EUROPEAN PATENT SPECIFICATION**

(45) Date of publication of patent specification: **18.12.91**  (51) Int. Cl.⁵: **H01R 13/527, H02G 15/10**

(21) Application number: **84306423.9**

(22) Date of filing: **20.09.84**

(54) Electric coupler.

(30) Priority: **20.09.83 GB 8325115**

(43) Date of publication of application:
**03.04.85 Bulletin 85/14**

(45) Publication of the grant of the patent:
**18.12.91 Bulletin 91/51**

(84) Designated Contracting States:
**AT BE CH DE FR IT LI LU NL SE**

(56) References cited:
**DE-A- 1 640 048**
**GB-A- 856 106**
**GB-A- 1 362 270**
**GB-A- 2 079 547**

(73) Proprietor: **BICC Public Limited Company**
**21, Bloomsbury Street**
**London, WC1B 3QN(GB)**

(72) Inventor: **Heaton, Andrew James**
**43, Smithy Brow Croft**
**Warrington Cheshire, WA3 7DA(GB)**
Inventor: **Cuthbertson, William**
**58, Broadway Eccleston**
**St. Helens Merseyside, WA10 5DG(GB)**
Inventor: **Smith, Walter**
**33, Fairholme Avenue Eccleston Park**
**Prescot, L34 2RN(GB)**

(74) Representative: **Poole, Michael John et al**
**BICC plc Group Patents & Licensing Dept.**
**Network House 1, Ariel Way Wood Lane**
**London W12 7SL(GB)**

## Description

This invention relates to an electric coupler for a wire armoured cable for use in mines and quarries.

In a known arrangement(GB-A-2079547), an electric coupler comprises a housing; a separate metal head at one end of the housing; at least two tubes of electrically insulating material secured in respective passages through the head and projecting into the housing; an electric contact positioned within each tube; an opening at the other end of the housing through which at least the insulated conductors of an electric cable pass, each conductor of the cable being electrically connected to one of the contacts; and clamping means, electrically connected to the head, for clamping the wire armouring of the cable; the voids within the coupler being filled with a resin or compound passed through an aperture in the housing after the coupler has been assembled. When the filling material is a hard-setting resinous insulating compound, it hardens to form a single solid resinous body embedding end parts of the cable conductors and of the contacts where they are connected together and thereby making the coupler weatherproof.

In this known arrangement, the housing has always been of metal and the clamping means has been a gland bolted externally to the end of the housing, though GB-A-856106 discloses a variant in which the gland is itself embedded in a second, separate body of insulating material contained in an auxiliary enclosure. This has the disadvantages that the coupler is heavy and expensive to produce and that a different size of gland has to be used for each size of cable.

It is the object of this invention to overcome these disadvantages without making the coupler unsuitable for use in hazardous situations.

The electric coupler according to the present invention is characterised in that the entire clamping means is within the housing and is thus embedded in the single solid resinous body; the housing is of plastics material; and the metal head forms the mating face of the coupler which engages the corresponding face of another coupler when they are engaged with one another.

Preferably the conductors are crimped to the contacts. An insulating sleeve preferably surrounds each crimped joint. Preferably the sleeve is of heat shrinkable plastics. Alternatively the sleeve may be formed from a wound tape of insulating material.

Portions of the metal head can be designed to extend between the contacts, thereby screening the contacts from one another. The metal head is preferably in one piece. Alternatively the head may be in two parts, a front part forming a face for the coupler, and a rear part forming screening fins between the contacts.

Preferably the wire armour clamping means is mounted on to at least one metal support pillar attached to the metal head. Where each conductor has a surrounding screen, preferably the clamping means has a fastening screw or screws by which each conductor screen can be mechanically and electrically connected to the clamping means. The clamping means preferably comprises at least two metal rings through which the cable conductors pass, the rings being fastened together by nuts which are screwed on to threaded portions on the support pillars, with the wire armouring clamped between the rings.

Preferably there are three support pillars attached to the metal head. Preferably the support pillars are screw threaded to the head. Where the head is in two parts, preferably a threaded portion of at least one support pillar extends through an aperture in the rear part and is screw threaded to the front part thereby securing the parts together.

The contact insulating tubes are preferably bonded to the metal head by a suitable adhesive. Alternatively, where the head is in two parts, the tubes may be held in position by clamping a portion of each tube between the two parts of the head. The tubes are preferably of a thermoset polyester dough moulded material.

The plastics housing may be of any polymeric material with suitable physical properties that will not be injured by contact with the insulating compound. We prefer to use a thermo plastics material that can be vacuum formed, preferably of PVC. The housing may be internally sprayed with metal to form an outer screen around the contacts and conductors. Alternatively a preformed metal (e.g. brass) mesh may be positioned around the contacts and conductors to form an outer screen, the mesh being mechanically and electrically connected by clamping rings to the head and the wire armouring clamping means. In a further alternative, the outer screen may be preformed, and the plastics housing is vacuum formed over the screen to form an integral screen and housing. The plastics housing is preferably clamped to the head. At the cable entry end, the housing is preferably stepped to reduce the diameter of the housing. The housing may be secured and sealed to the cable by clamping the housing to the cable around which sealing tape has been wound. Alternatively the steps on the housing may be short, and may be accurately cut to form an opening having substantially the same diameter as the outer diameter of the cable, thereby forming a tight fit with the cable. Preferably the housing is in two parts which are fastened together.

The insulating compound is preferably based on an epoxy resin, a polyurethane or an acrylic casting resin.

This invention has the advantage that it is much lighter than known couplers, and less expensive to produce. The wire armouring clamping means can be used for cables having a diameter within a predetermined range. The metal head can provide a screen between the contacts, and the coupler can therefore be fully screened.

This coupler has particular use at 3.3 kV and 6.6 kV.

The invention is further described, by way of example, with reference to the accompanying drawings, in which:-

Figure 1 is a longitudinal cross-section of an electric coupler in accordance with the invention; and

Figure 2 is a longitudinal cross-section of an alternative electric coupler in accordance with the invention.

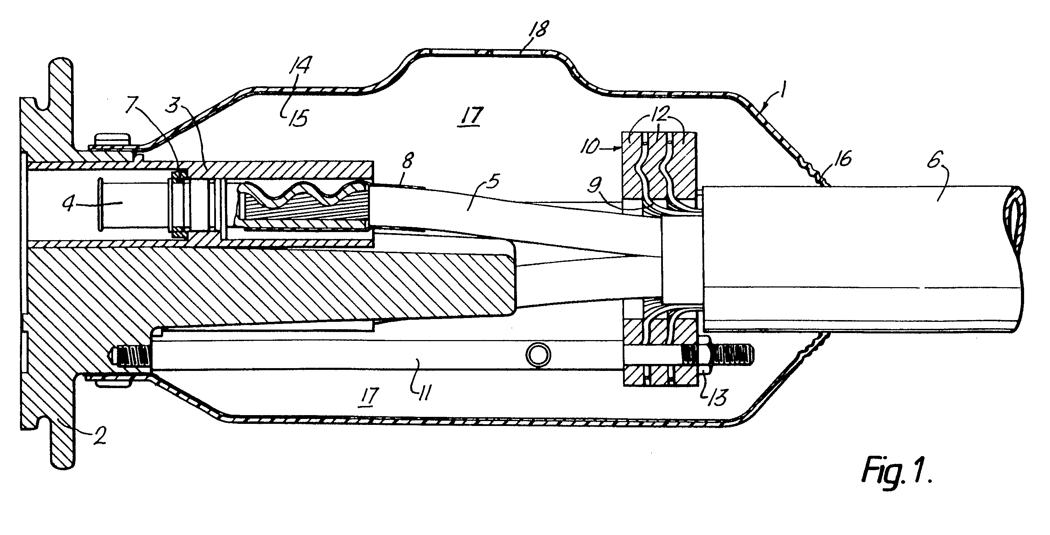

An electric coupler (1), as shown in Figure 1, comprises a single part metal head (2) having three tubes (3) secured within it. The tubes (3) are of a thermoset dough-moulded polyester insulating material and are secured in the head by an epoxy adhesive.

Each tube (3) forms an insulator for a contact (4) on the end of a respective conductor (5) of a three core wire armoured cable (6). The contact (4) is made of copper and is crimped on to its exposed conductor (5) and held within the corresponding tube (3) by a brass contact securing ring (7) screwed on to the contact. An insulating sleeve (8), formed from a heat shrinkable plastics material, surrounds each crimped joint to keep the interstices of the stranded conductor free from the insulating compound with which the coupler will in due course be filled.

The cable armouring (9) is connected to a clamp (10) which is mounted on metal support pillars (11) which are screwed into and extend from the metal head (2). The clamp (10) comprises three metal rings (12) through which the cable conductors pass, the rings being fastened together by nuts (13) which are screwed on to the support pillars (11), with the armouring clamped between the rings.

The plastics housing (14) formed from a "rigid" PVC composition, has an inner metal film (15) which forms an outer screen around the contacts and conductors. One end of the plastics housing (14) is clamped to the metal head, the other end having a series of short steps (16) which are cut to form a tight fit with the outside of the cable (6).

The void space (17) within the housing (14) is filled with an polyurethane casting resin which was poured through an aperture (18) in the housing after the coupler had been assembled.

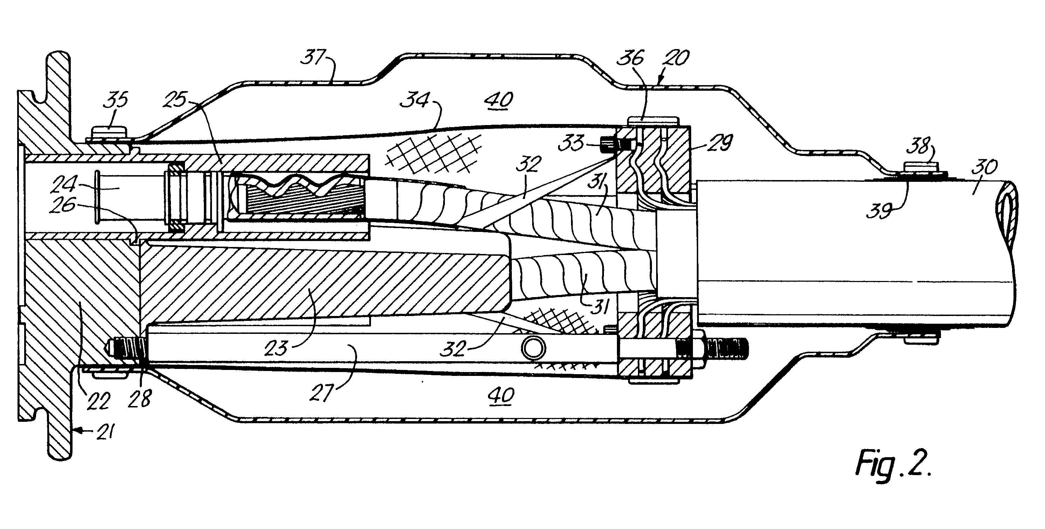

An alternative electric coupler (20), as shown in Figure 2, is substantially the same except for the features about to be described. It comprises a two part metal head (21); a front part (22) forming a face for the coupler, and a rear part (23) forming screening fins between the contacts (24). The insulating tubes (25) which form the contact housings are secured in position by clamping a portion (26) of each tube between the two parts of the head. The front part (22) and rear part (23) of the metal head (21) are secured together by the support pillars (27) which extend through apertures (28) in the rear part and are screwed into the front part.

The support pillars (27) form the mountings for the armour clamp (29).

In this particular example, the cable (30) comprises three screened conductors (31) The conductor screens (32) are mechanically and electrically connected to the clamp (29) by a fastening screw (33).

A brass screening mesh (34) is positioned around the contacts and conductors to form an outer screen, the mesh being mechanically and electrically connected by clamping rings (35,36) to the head (21) and the clamp (29).

The plastics housing (37) formed from a "rigid" PVC composition, is clamped by clamping rings (35,38) to the head (21) and the cable (30).

To provide a tight fit between the plastics housing (37) and the cable (30), a sealing tape (39) is wrapped around the cable before the housing is clamped down.

The void space (40) is filled with a resin after the coupler has been assembled.

## Claims

1.  An electric coupler for a wire-armoured cable for use in mines and quarries comprising a housing(1); a separate metal head(2) closing one end of the housing; at least two tubes(3) of electrically insulating material secured in respective passages through the head(2) and projecting into the housing(1); an electric contact(4) positioned within each tube(3); an opening at the other end of the housing through which at least the insulated conductors(5) of the cable(6) pass, each conductor of the cable(6) being electrically connected inside the housing(1) to one of the contacts(4); and clamping means(10), electrically connected to the head(2), for clamping the wire armouring(9)of the cable; the voids within the housing being filled with a hardsetting resinous insulating compound inserted through an aperture(18) in the housing after the coupler has been assembled, and which hardens to form a single solid resinous body embedding end parts of the cable conductor(5) and of the contacts(4) where they are connected together and thereby making the coupler weatherproof, characterised in that the entire clamping means (10) is within the housing (1) and is thus embedded in the said single solid resinous body, the housing (1) is of plastics material and the metal head (2) forms the mating face of the coupler which engages the corresponding face of another coupler when they are engaged with one another.

2. An electric coupler as claimed in Claim 1, wherein the metal head (2) is in two parts, a front part forming the mating face of the coupler as aforesaid, and a rear part forming screening fins between the contacts inside the housing.

3. An electric coupler as claimed in Claim 2, wherein a threaded portion of at least one support pillar extends through an aperture in the rear part and is screw threaded to the front part thereby securing the parts together.

4. An electric coupler as claimed in Claim 1 or Claim 3, wherein the wire armour clamping means(10) is mounted on to at least one metal support pillar (11) attached to the metal head and comprises at least two metal rings(12) through which the cable conductors pass, the rings(12) being fastened together by nuts (13) which are screwed on to threaded portions on the support pillars, with the wire armouring (9) clamped between the rings.

5. An electric coupler as claimed in any one of the preceeding Claims, wherein the plastics housing (1) is vacuum formed.

6. An electric coupler as claimed in any one of the preceeding Claims, wherein the plastics housing (1) is clamped to the head (2).

7. An electric coupler as claimed in any one of the preceeding Claims, wherein at the cable entry end, the housing (1) is stepped to reduce the diameter of the housing.

**Revendications**

1. Coupleur électrique pour câble armé utilisable dans les mines et les carrières, comprenant un boîtier (1), une tête métallique séparée (2) fermant une première extrémité du boîtier, au moins deux tubes (3) en matière électriquement isolante fixés dans des passages respectifs traversant la tête (2) et dépassant dans le boîtier (1), un contact électrique (4) disposé dans chaque tube (3), une ouverture à l'autre extrémité du boîtier à travers laquelle passent au moins les conducteurs isolés (5) du câble (6), chaque conducteur du câble (6) étant relié électriquement dans le boîtier (1) à l'un des contacts (4), et un moyen de serrage (10) relié électriquement à la tête (2) pour serrer l'armure en fil (9) du câble, les vides à l'intérieur du boîtier étant remplis à l'aide d'une composition isolante de résine dure après séchage introduite via un orifice (18) du boîtier après l'assemblage du coupleur et qui durcit pour former un corps plein unique en résine englobant les parties terminales des conducteurs (5) du câble et des contacts (4) là où ils sont reliés les uns aux autres et, de ce fait, rendant étanche le coupleur, caractérisé en ce que tout le moyen de serrage (10) est à l'intérieur du boîtier (1) et est donc noyé dans ledit corps plein unique en résine, le boîtier (1) est en matière plastique et la tête métallique (2) forme la face d'accouplement du coupleur qui vient contre la face correspondante d'un autre coupleur lorsqu'ils sont mutuellement enclenchés.

2. Coupleur électrique selon la revendication 1, dans lequel la tête métallique (2) est en deux parties, une partie antérieure formant la face d'accouplement du coupleur comme décrit plus haut, et une partie postérieure formant des ailettes de protection entre les contacts à l'intérieur du boîtier.

3. Coupleur électrique selon la revendication 2, dans lequel une partie filetée d'au moins une colonne de support s'étend à travers un orifice présent dans la partie postérieure et se visse sur la partie antérieure en fixant de ce fait les parties l'une à l'autre.

4. Coupleur électrique selon la revendication 1 ou la revendication 3, dans lequel le moyen de serrage (10) d'armure en fil est monté sur au moins une colonne métallique de support (11) fixée à la tête métallique et comporte au moins deux bagues métalliques (12) à travers lesquelles passent les conducteurs du câble, les bagues (12) étant fixées l'une à l'autre par des écrous (13) qui sont vissés sur des parties filetées des colonnes de support, l'armure en fil (9) étant serrée entre les bagues.

5. Coupleur électrique selon l'une quelconque des revendications précédentes, dans lequel le boîtier (1) en matière plastique est formé sous vide.

6. Coupleur électrique selon l'une quelconque des revendications précédentes, dans lequel le boîtier (1) en matière plastique est serré sur la tête (2).

7. Coupleur électrique selon l'une quelconque des revendications précédentes, dans lequel, à l'extrémité d'entrée du câble, le boîtier (1) a des épaulements pour réduire le diamètre du boîtier.

**Patentansprüche**

1. Elektrische Kupplung für ein drahtbewehrtes Kabel zur Verwendung in Minen und Steinbrüchen mit einem Gehäuse (1), einem ein Ende des Gehäuses verschließenden separaten Metallkopf (2), mindestens zwei Rohren (3) aus elektrisch isolierendem Material, die in entsprechenden Durchlässen durch den Kopf (2) befestigt sind und sich in das Gehäuse (1) erstrekken, einem innerhalb jeden Rohrs (3) angeordneten elektrischen Kontakt (4), einer Öffnung am anderen Ende des Gehäuses, durch das mindestens die isolierten Leiter (5) des Kabels (6) verlaufen, wobei jeder Leiter des Kabels (6) elektrisch im Gehäuse (1) mit einem der Kontakte (4) verbunden ist, und mit einer elektrisch mit dem Kopf (2) verbundenden Klemmeinrichtung (10) zum Klemmen der Drahtbewehrung (9) des Kabels, wobei die Lücken innerhalb des Gehäuses mit einer aushärtenden harzartigen Isolierverbindung gefüllt sind, die durch eine Öffnung (18) in das Gehäuse nach dem Zusammenbau der Kupplung eingefüllt wird und die aushärtet, um einen einzigen festen harzartigen Körper zu bilden, der Endteile des Kabelleiters (5) und der Kontakte (4), wo sie miteinander verbunden sind, einbettet und dadurch die Kupplung wasserdicht macht, **dadurch gekennzeichnet**, daß die gesamte Klemmeinrichtung (10) innerhalb des Gehäuses (1) angeordnet und damit in dem einzigen festen harzartigen Körper eingebettet ist, wobei das Gehäuse (1) aus Kunststoffmaterial besteht und der Metallkopf (2) die Paßfläche der Kupplung bildet, die mit der entsprechenden Fläche einer anderen Kupplung in Eingriff steht, wenn sie miteinander verbunden sind.

2. Elektrische Kupplung nach Anspruch 1, wobei der Metallkopf (2) zweiteilig ist und ein Frontteil die passende Stirnseite der Kupplung und ein Rückteil Abschirmrippen zwischen den Kontakten im Inneren des Gehäuses bilden.

3. Elektrische Kupplung nach Anspruch 2, wobei sich ein Gewindeabschnitt mindestens einer Haltestütze durch eine Öffnung im Rückteil erstreckt, an das Frontteil geschraubt ist und dadurch die Teile aneinander befestigt.

4. Elektrische Kupplung nach Anspruch 1 oder Anspruch 3, wobei die drahtbewehrte Klemmeinrichtung (10) auf mindestens einer an dem Metallkopf angebrachten Metallhaltestütze (11) angeordnet ist und mindestens zwei Metallringe (12) aufweist, durch die die Kabelleiter verlaufen, wobei die Ringe (12) mit der zwischen den Ringen geklemmten Drahtbewehrung (9) aneinander durch Muttern (13) befestigt sind, die auf Gewindeabschnitte auf den Haltestützen geschraubt sind.

5. Elektrische Kupplung nach einem der vorstehenden Ansprüche, wobei das Kunststoffgehäuse (1) mittels Vakuum geformt ist.

6. Elektrische Kupplung nach einem der vorstehenden Ansprüche, wobei das Kunststoffgehäuse (1) an den Kopf (2) geklemmt ist.

7. Elektrische Kupplung nach einem der vorstehenden Ansprüche, wobei an dem Kabeleintrittsende das Gehäuses (1) gestuft ist, um den Durchmesser des Gehäuses zu reduzieren.

Fig.1.

Fig. 2.